# EUROPÄISCHE PATENTSCHRIFT

(11) **EP 1 865 228 B1**
(45) Veröffentlichungstag und Bekanntmachung des Hinweises auf die Patenterteilung: **14.11.2012**
(21) Anmeldenummer: 07109572.3
(22) Anmeldetag: 05.06.2007
(51) Int. Cl.: F16H 61/04, F16H 61/686

(54) **Verfahren zum Betreiben eines Antriebsstrangs**
Method for operating a drive train
Procédé destiné au fonctionnement d'une chaîne cinématique

(30) Priorität: 08.06.2006 DE 102006026605
(43) Veröffentlichungstag der Anmeldung: 12.12.2007
(73) Patentinhaber: ZF Friedrichshafen AG, 88038 Friedrichshafen (DE)
(72) Erfinder: Popp, Christian, 88079, Kressbronn (DE); Steinhauser, Klaus, 88079, Kressbronn (DE)

(56) Entgegenhaltungen:
- EP-A2- 1 219 868
- EP-A2- 1 398 537
- WO-A1-2005/065981
- DE-A1- 10 035 479
- DE-A1- 10 338 624
- DE-A1- 10 361 288
- DE-A1-102004 001 380
- US-A1- 2003 220 170
- US-B1- 6 577 939

## Beschreibung

Die Erfindung betrifft ein Verfahren zum Betreiben eines zumindest ein Automatgetriebe und ein Antriebsaggregat umfassenden Antriebsstrangs eines Kraftfahrzeugs nach dem Oberbegriff des Anspruchs 1.

Die Hauptkomponenten eines Antriebsstrangs eines Kraftfahrzeugs sind ein Antriebsaggregat und ein Getriebe. Ein Getriebe wandelt Drehmomente und Drehzahlen und setzt so das Zugkraftangebot des Antriebsaggregats um. Die hier vorliegende Erfindung betrifft ein Verfahren zum Betreiben eines Antriebsstrangs, der zumindest ein Antriebsaggregat und ein Automatgetriebe umfasst. Im Sinne der hier vorliegenden Erfindung sollen unter dem Begriff Automatgetriebe alle Getriebe mit einem automatischen Gangwechsel verstanden werden, die auch als Stufenautomatgetriebe bezeichnet werden.

Aus der gattungsgemäβen 100 35 479 A1 ist ein Verfahren zum Betreiben eines Automatgetriebes bekannt, bei welchem zur Verbesserung der Schaltgeschwindigkeit aufeinanderfolgende Hochschaltungen bzw. aufeinanderfolgende Rückschaltungen verschachtelt ausführbar sind. Hierzu wird während jeder ersten Hochschaltung bzw. Rückschaltung ein für die nachfolgende zweite Hochschaltung bzw. Rückschaltung benötigtes Schaltelement während der laufenden ersten Hochschaltung bzw. Rückschaltung derart vorbereitet, dass bei Erreichen eines Synchronpunkts, nämlich einer Synchrondrehzahl, der laufenden ersten Hochschaltung bzw. Rückschaltung die sofortige Durchführung der nachfolgenden zweiten Hochschaltung bzw. Rückschaltung möglich ist.

Dabei werden nach der DE 100 35 479 A1 Einfachschaltungen miteinander verschachtelt, was bedeutet, dass jede ausgeführte erste Hochschaltung bzw. Rückschaltung sowie jede nachfolgende zweite Hochschaltung bzw. Rückschaltung eine Einfachschaltung zwischen zwei unmittelbar aufeinander folgenden Gängen ist.

Das aus der DE 100 35 479 A1 bekannte Verfahren ist bei einem Automatgetriebe einsetzbar, welches fünf Schaltelemente aufweist, von welchen zur Momentübertragung bzw. Kraftübertragung in einem Vorwärtsgang und in einem Rückwärtsgang jeweils zwei Schaltelemente geschlossen und drei Schaltelemente geöffnet sind. Mit einem solchen Automatgetriebe lassen sich sechs Vorwärtsgänge realisieren. Bei der Entwicklung von Automatgetrieben ist ein Trend nach einer sich zunehmend vergrößernden Ganganzahl für insbesondere die Vorwärtsgänge eines Automatgetriebes feststellbar. So befinden sich derzeit Automatgetriebe mit acht Vorwärtsgängen und einem Rückwärtsgang in der Entwicklung, wobei solche Automatgetriebe über fünf Schaltelemente verfügen, und wobei zur Momentübertragung bzw. Kraftübertragung drei dieser fünf Schaltelemente in einem Vorwärtsgang sowie in einem Rückwärtsgang geschlossen und die übrigen zwei Schaltelemente geöffnet sind. Aus der EP 1 398 537 A2 beispielsweise sind auch Getriebeschemata für Automatgetriebe mit sechs oder sieben Vorwärtsgängen bekannt, bei denen in jedem Gang drei von insgesamt fünf Schaltelemente geschlossen sind. Für solche Automatgetriebe ist das aus DE 100 35 479 A1 bekannte Verfahren ungeeignet.

Aus der EP 1 219 868 A2 ist für ein Getriebe, bei dem in jedem Gang zwei Schaltelemente geschlossen sind, ein Verfahren zur Steuerung des Schaltablaufs einer per Schaltbefehl angeforderten Rückschaltung über drei Gangstufen bekannt, bei dem insgesamt vier der Schaltelemente des Getriebes beteiligt sind. Dabei wird im Laufe dieser Dreifach-Rückschaltung die Getriebeübersetzung ausgehend vom Ausgangsgang zunächst in einen Zwischengang und anschließend ausgehend von diesem Zwischengang in den durch den Schaltbefehl definierten Zielgang geführt. Hierzu wird zunächst das erste der beiden im Ausgangsgang geschlossenen Schaltelemente in Schlupf gebracht, ohne es vollständig zu öffnen, und zeitlich parallel dazu ein zuvor offenes Schaltelement, welches sowohl für den Zwischengang als auch für den Zielgang zur Drehmomentübertragung benötigt wird, zur Drehmomentübertragung gebracht, ohne es vollständig zu schließen. Bis zu diesem Zeitpunkt ähnelt der Schaltablauf also einer Doppel-Rückschaltung, die nicht vollständig beendet wird. Etwa in der Mitte dieses ersten Teils der Dreifach-Rückschalung wird das zweite der beiden im Ausgangsgang geschlossenen Schaltelemente vom Druckniveau her abgesenkt, ohne es in Schlupf zu bringen, und ein weiteres zuvor offenes Schaltelement, welches im Zielgang als zweites drehmomentübertragendes Schaltelement benötigt wird, mit Druckmittel vorbefüllt, ohne dass es Drehmoment übertragen kann. Im sich anschließenden zweiten Teil der Dreifach-Rückschaltung wird nun das erste der beiden im Ausgangsgang geschlossenen Schaltelemente vollständig geöffnet, das zweite der beiden im Ausgangsgang geschlossenen Schaltelemente zunächst in Schlupf gebracht und dann vollständig geöffnet, das im Zielgang als erstes drehmomentübertragendes Schaltelement benötigte, aber noch nicht vollständig geschlossene Schaltelement vollständig geschlossen, und das im Zielgang als zweites drehmomentübertragendes Schaltelement benötigte Schaltelement zunächst in Drehmomentübertragung gebracht und anschließend vollstängig geschlossen. Die zwei zeitlich beabstandeten Überschneidungsphasen - die erste am Ende des ersten Teils der Rückschaltung und die zweite kurz vor Ende des zweiten Teils der Rückschaltung - bewirken, dass der Fahrer den Übergang in den Zwischengang nicht als gesonderte Schaltung spürt, sondern den Eindruck einer direkten Schaltung vom Ausgangsgang in den Zielgang hat.

Die aus der EP 1 219 868 A2 bekannte Rückschaltung über drei Gangstufen funktioniert nur in Verbindung mit einer Getriebe-Schaltlogik, bei der einerseits zur Drehmomentübertragung im Zielgang zwei andere Schaltelemente benötigt werden als im Ausgangsgang, die andererseits aber auch ermöglicht eines der beiden im Zielgang benötigten Schaltelemente bereits während der ersten Teilschaltung drehmomentübertragend zu schalten.

Hiervon ausgehend liegt der vorliegenden Erfindung das Problem zu Grunde, ein neuartiges Verfahren zum Betreiben eines zumindest ein Automatgetriebe und ein Antriebsaggregat umfassenden Antriebsstrangs zu schaffen.

Gemäß der hier vorliegenden Erfindung wird dieses Problem durch ein Verfahren mit den Merkmalen des Anspruchs 1 gelöst.

Nach einem ersten Aspekt der Erfindung sind bei einem Automatgetrie-be mit genan fünf Schaltelementen, von welchen zur Moment- bzw. Kraftübertragung in einem Vorwärtsgang bzw. in einem Rückwärtsgang jeweils drei Schaltelemente geschlossen und die übrigen zwei Schaltelemente geöffnet sind, zwei aufeinanderfolgende Hochschaltungen bzw. zwei aufeinanderfolgende Rückschaltungen durch Ansteuerung der fünf Schaltelemente derart ausführbar, dass:
a) eine erste Hochschaltung bzw. Rückschaltung als Mehrfachschaltung ausgeführt wird, wobei während der laufenden ersten Hochschaltung bzw. Rückschaltung als nachfolgende zweite Hochschaltung bzw. Rückschaltung eine Einfachschaltung oder eine Mehrfachschaltung vorbereitet wird;
b) bei der Ausführung der ersten Hochschaltung bzw. Rückschaltung als Mehrfachschaltung ein erstes Schaltelement des Automatgetriebes geöffnet und damit abgeschaltet sowie ein zweites Schaltelement des Automatgetriebes geschlossen und damit zugeschaltet wird;
c) während der Ausführung der ersten Hochschaltung bzw. Rückschaltung als Mehrfachschaltung für die nachfolgende zweite Hochschaltung bzw. Rückschaltung ein drittes Schaltelement des Automatgetriebes zum Öffnen und damit Abschalten sowie ein viertes Schaltelement des Automatgetriebes zum Schließen und damit Zuschalten vorbereitet wird;
d) während der Ausführung der ersten Hochschaltung bzw. Rückschaltung und während der Ausführung der zweiten Hochschaltung bzw. Rückschaltung ein fünftes Schaltelement geschlossen bzw. annähernd geschlossen gehalten wird.

Nach einem zweiten Aspekt der Erfindung wird bei einem Automatgetriebe mit fünf Schaltelementen, von welchen zur Moment- bzw. Kraftübertragung in einem Vorwärtsgang bzw. in einem Rückwärtsgang jeweils drei Schaltelemente geschlossen und die übrigen zwei Schaltelemente geöffnet sind, während der Ausführung einer ersten Hochschaltung bzw. Rückschaltung für eine nachfolgende zweite Hochschaltung bzw. Rückschaltung ein während der zweiten Hochschaltung bzw. Rückschaltung schließendes Schaltelement zu einem Zeitpunkt zum Schließen vorbereitet, der um eine zeitgesteuert oder ereigneisgesteuert applizierbare erste Zeitspanne vor dem Erreichen des Synchronpunkts der laufenden ersten Hochschaltung bzw. Rückschaltung liegt.

Nach einem dritten Aspekt der Erfindung wird bei einem Automatgetriebe mit fünf Schaltelementen, von welchen zur Moment- bzw. Kraftübertragung in einem Vorwärtsgang bzw. in einem Rückwärtsgang jeweils drei Schaltelemente geschlossen und die übrigen zwei Schaltelemente geöffnet sind, während der Ausführung einer ersten Hochschaltung bzw. Rückschaltung und/oder während der Ausführung einer zweiten, nachfolgenden Hochschaltung bzw. Rückschaltung ein Moment des Antriebsaggregats gegenüber einem von einem Fahrerwunsch abgeleiteten Moment für das Antriebsaggregat erhöht und/oder verringert, um die verschachtelte Ausführung aufeinanderfolgender Hochschaltungen bzw. Rückschaltungen zu unterstützen.

Die drei obigen erfindungsgemäßen Aspekte können entweder alleine oder in Kombination von zwei Aspekten oder in Kombination aller drei Aspekte zum Betreiben eines Antriebsstrangs Verwendung finden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert.

Dabei zeigt:
- Fig. 1: ein Antriebsstrangschema eines Kraftfahrzeugs;
- Fig. 2: ein Getriebeschema eines Automatgetriebes des Antriebsstrangs mit fünf Schaltelementen;
- Fig. 3: eine Schaltelementmatrix für die Schaltelemente des Getriebeschemas der Fig. 2 zur Verdeutlichung welche Schaltelemente in welchem Gang geschlossen sind und
- Fig. 4: ein Diagramm zur Verdeutlichung des erfindungsgemäßen Verfahrens zum Betreiben eines Antriebsstrangs eines Kraftfahrzeugs, der ein Automatgetriebe gemäß Fig. 2 und 3 umfasst.

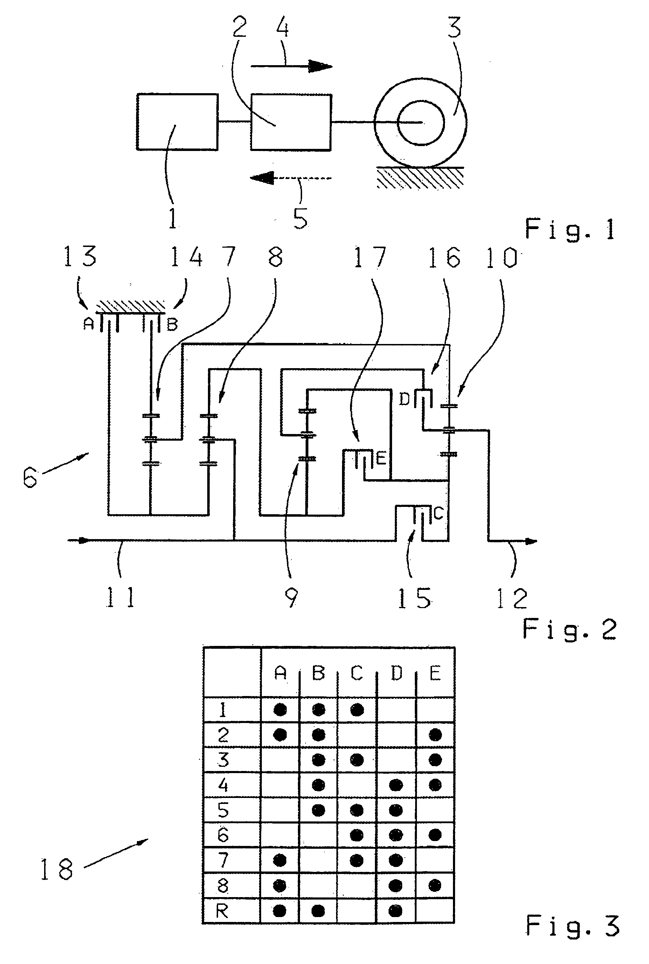

Fig. 1 zeigt stark schematisiert ein Antriebsstrangschema eines Kraftfahrzeugs, wobei der Antriebsstrang von einem Antriebsaggregat 1, einem Automatgetriebe 2 und angetriebenen Rädern 3 des Kraftfahrzeugs gebildet wird. Das Automatgetriebe 2 setzt ein Zugkraftangebot des Antriebsaggregats 1 auf die Räder 3 des Kraftfahrzeugs um. Dann, wenn der Antriebsstrang gemäß Fig. 1 im Zugbetrieb betrieben wird, ist ein Leistungsfluss in Richtung des Pfeils 4 vom Antriebsaggregat 1 in Richtung auf die Räder 3 des Kraftfahrzeugs gerichtet Wird hingegen der Antriebsstrang z. B. beim Bremsen oder Ausrollen im Schubbetrieb betrieben, so ist der Leistungsfluss in Richtung des Pfeils 5 von den Rädern 3 zum Antriebsaggregat 1 gerichtet.

Die Erfindung betrifft ein Verfahren zum Betreiben eines Antriebsstrangs, der ein Antriebsaggregat 1 und ein Automatgetriebe 2 umfasst, wobei das Automatgetriebe 2 fünf Schaltelemente aufweist, von welchen zur Moment- bzw. Kraftübertragung in einem Vorwärtsgang bzw. in einem Rückwärtsgang jeweils drei Schaltelemente geschlossen und die übrigen zwei Schaltelemente geöffnet sind. Fig. 2 zeigt ein Getriebeschema 6 eines solchen Stufenautomatgetriebes 2, welches vier Getrieberadsätze 7, 8, 9 und 10 aufweist, um ein an einem Getriebeeingang 11 anliegendes Getriebeeingangsmoment in ein Getriebeausgangsmoment an einem Getriebeausgang 12 umzusetzen. Die Getrieberadsätze 7, 8, 9 und 10 des Automatgetriebes 2 sind dabei gemäß Fig. 2 als Planetenrad-Getrieberadsätze ausgeführt. Gemäß dem Getriebeschema 6 der Fig. 2 verfügt das Automatgetriebe neben den vier Getrieberadsätzen 7 bis 10 weiterhin über fünf Schaltelemente 13, 14, 15, 16 und 17, Das Schaltelement 13 wird auch als Schaltelement A, das Schaltelement 14 auch als Schaltelement B, das Schaltelement 15 auch als Schaltelement C, das Schaltelement 16 auch als Schaltelement D und das Schaltelement 17 auch als Schaltelement E bezeichnet. Bei dem Schaltelement A sowie Schaltelement B handelt es sich jeweils um Bremsen, bei den Schaltelementen C, D und E handelt es sich jeweils um Kupplungen.

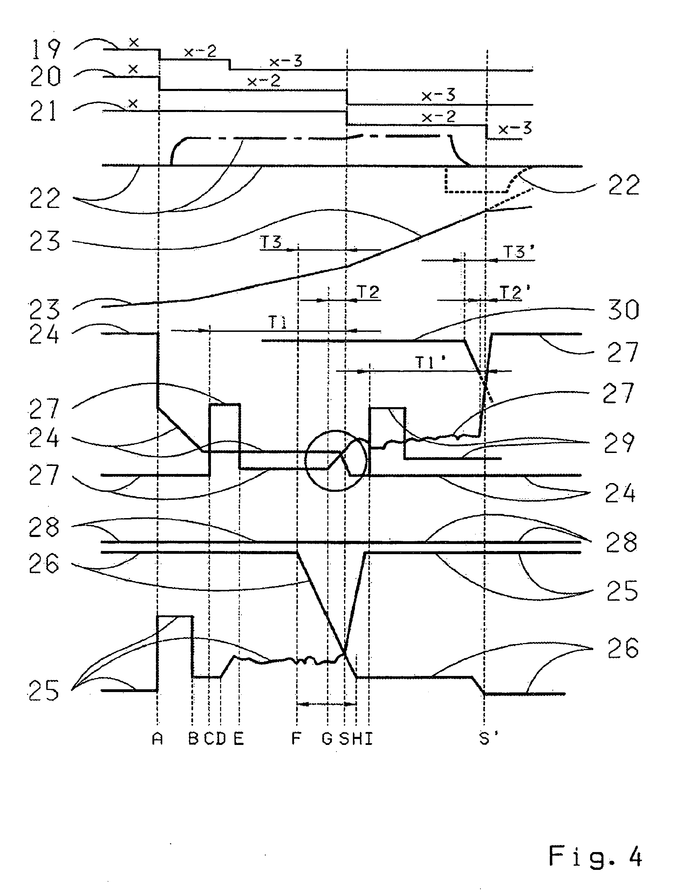

Für das in Fig. 2 schematisiert dargestellte Automatgetriebe, welches die fünf Schaltelemente 13 bis 17 umfasst, können unter Verwendung der in Fig. 4 dargestellten Schaltungsmatrix 18 acht Vorwärtsgänge sowie ein Rückwärtsgang realisiert werden, wobei in der linken Spalte der Schaltungsmatrix 18 die acht Vorwärtsgänge ,,1" bis ,,8" sowie der Rückwärtsgang ,,R" und in der oberen Zeile der Schaltungsmatrix 18 die Schaltelemente A bis E aufgetragen sind. Schaltelemente, die in der Schaltelementmatrix 18 mit einem Punkt markiert sind, sind im jeweiligen Gang geschlossen. In jedem Vorwärtsgang sowie im Rückwärtsgang sind zur Kraftübertragung vom Getriebeeingang 11 auf den Getriebeausgang 12 demnach jeweils drei der fünf Schaltelemente geschlossen. So sind z. B. für den Vorwärtsgang ,,1" die Schaltelemente A, B und C sowie für den Rückwärtsgang ,,R" die Schaltelemente A, Bund D geschlossen. Die anderen beiden Schaltelemente sind hingegen im jeweiligen Gang geöffnet.

Zur Verbesserung der Schaltgeschwindigkeit werden aufeinanderfolgende Hochschaltungen bzw. aufeinanderfolgende Rückschaltungen verschachtelt ausgeführt, nämlich derart, dass bei einer ersten Hochschaltung bzw. Rückschaltung mindestens ein für eine nachfolgende zweite Hochschaltung bzw. Rückschaltung benötigtes Schaltelement während der laufenden ersten Hochschaltung bzw. Rückschaltung vorbereitet wird, und zwar derart, dass bei Erreichen eines Synchronpunkts der laufenden ersten Hochschaltung bzw. Rückschaltung die sofortige Durchführung der nachfolgenden zweiten Hochschaltung bzw. Rückschaltung möglich ist.

In der nachfolgenden Tabelle sind für das in Fig. 2, 3 dargestellten Automatgetriebe 2 in der linken Spalte verschachtelt ausführbare Rückschaltungen sowie verschachtelt ausführbare Hochschaltungen eingetragen, wobei dann, wenn in der linken Spalte hinter einer Rückschaltung bzw. Hochschaltung in Klammern eine weitere Rückschaltung bzw. Hochschaltung aufgeführt ist, es sich bei der nicht in Klammern gesetzten Rückschaltung bzw. Hochschaltung um die erste Rückschaltung bzw. Hochschaltung und bei der in Klammer gesetzten Rückschaltung bzw. Hochschaltung um die zweite Rückschaltung bzw. Hochschaltung handelt, für die während der laufenden ersten Rückschaltung bzw. Hochschaltung Schaltelemente vorbereitet werden.

| | Schaltelemente | | | | |
|---|---|---|---|---|---|
| | A | B | C | D | E |
| Rückschaltung | | | | | |
| 8-6 (6-5) | a | vz | z | x | va |
| 7-5 (5-4) | a | z | va | x | vz |
| 5-3 (3-2) | vz | x | va | a | z |
| 4-2 (2-1) | z | x | vz | a | va |
| 8-4 (4-3) | a | z | vz | va | x |
| 8-2 (2-1) | x | z | vz | a | va |
| 6-3 (3-2) | vz | z | va | a | x |
| 7-5 (5-3) | a | z | x | va | vz |
| 6-4 (4-2) | vz | z | a | va | x |

| Hochschaltung | | | | | |
|---|---|---|---|---|---|
| 1-3 (3-4) | a | x | va | vz | z |
| 2-4 (4-5) | a | x | vz | z | va |
| 4-6 (6-7) | vz | a | z | x | va |
| 5-7 (7-8) | z | a | va | x | vz |

In der Tabelle sind Schaltelemente, die während einer auszuführenden ersten Hochschaltung bzw. Rückschaltung geschlossen und damit zugeschaltet werden, mit ,,z" gekennzeichnet. Schaltelemente, die hingegen während einer ersten Hochschaltung bzw. Rückschaltung geöffnet und damit abgeschaltet werden, sind in der obigen Tabelle mit "a" gekennzeichnet. Schaltelemente, die während einer ersten Hochschaltung bzw. Rückschaltung für eine nachfolgende zweite Hochschaltung bzw. Rückschaltung zum Schließen und damit Zuschalten oder zum Öffnen und damit Abschalten vorbereitet werden, sind in der obigen Tabelle mit "vz" oder "va" gekennzeichnet. Mit "x" gekennzeichnete Schaltelemente sind und bleiben während einer Hochschaltung bzw. Rückschaltung geschlossen.

Bei Verwendung der obigen Tabelle für das Automatgetriebe der Fig. 2 und 3 werden abhängig von einem auszuführenden Gangwechsel von einem Ist-Gang in einen Soll-Gang sowohl als erste Hochschaltungen als auch als erste Rückschaltungen Mehrfachschaltungen ausgeführt. Während einer Ausführung einer Mehrfachschaltung als erste Hochschaltung bzw. Rückschaltung wird als zweite nachfolgende Hochschaltung bzw. Rückschaltung eine Einfachschaltung oder eine Mehrfachschaltung vorbereitet. Erste Mehrfachrückschaltungen sind gemäß der obigen Tabelle Doppelrückschaltungen oder Dreifachrückschaltungen oder Vierfachrückschaltungen oder gar Sechsfachrückschaltungen. Gegebenfalls nachfolgende zweite Mehrfachrückschaltungen sind Doppelrückschaltungen. Erste Mehrfachhochschaltungen sind stets Doppelhochschaltungen, Als zweite, nachfolgende Hochschaltung wird während einer als Doppelhochschaltungen ausgeführten ersten Mehrfachhochschaltung eine Einfachhochschaltung vorbereitet.

Nach einem ersten Aspekt der hier vorliegenden Erfindung wird bei Ausführung einer ersten Hochschaltung bzw. Rückschaltung als Mehrfachschaltung ein erstes Schaltelement geöffnet und damit abgeschaltet sowie ein zweites Schaltelement geschlossen und damit zugeschaltet. Während der Ausführung der ersten Hochschaltung bzw. Rückschaltung als Mehrfachschaltung wird dann für die nachfolgende zweite Hochschaltung bzw. Rückschaltung, die als Einfachschaltung oder Mehrfachschaltung vorbereitet und gegebenenfalls ausgeführt wird, ein drittes Schaltelement zum Öffnen und damit Abschalten sowie ein viertes Schaltelement zum Schließen und damit Zuschalten vorbereitet. Während der Ausführung der ersten Hochschaltung bzw. Rückschaltung und während der Ausführung der zweiten Hochschaltung bzw. Rückschaltung wird ein fünftes Schaltelement geschlossen bzw. annähernd geschlossen gehalten wird.

Dieser erste Aspekt der hier vorliegenden Erfindung wird nachfolgend unter Bezugnahme auf Fig. 4 an dem Beispiel von zwei aufeinanderfolgenden Rückschaltungen beschrieben. Die erste Rückschaltung wird als Mehrfachschaltung, nämlich als Doppelschaltung, ausgeführt. Die zweite Rückschaltung wird während der Ausführung der ersten Rückschaltung als Einfachschaltung vorbereitet. Es kann sich also z. B. nach der obigen Tabelle um die verschachtelten Rückschaltungen 7-5 (5-4) oder auch 4-2 (2-1) handeln.

In Fig. 4 sind zeitliche Verläufe unterschiedlicher Signale aufgetragen, wobei ein Signalverlauf 19 einen fahrerwunschabhängigen Soll-Gang visualisiert, wobei ein Signalverlauf 20 einen auf Basis des Soll-Gangs ermittelten Ziel-Gang visualisiert, wobei ein Signalverlauf 21 einen Ist-Gang visualisiert, wobei ein Signal-Verlauf 22 ein Drehmoment des Antriebsaggregats 1 des Antriebsstrangs und ein Signalverlauf 23 eine Drehzahl des Antriebsaggregats 1 visualisiert. Die Signalverläufe 24, 25, 26, 27 und 28 visualisieren die Ansteuerung bzw. das zeitliche Verhalten von fünf bei der verschachtelten Ausführung von zwei aufeinanderfolgenden Rückschaltungen beteiligten Schaltelementen, wobei der Signalverlauf 24 das zeitliche Verhalten eines bei der ersten Rückschaltung zu öffnenden und damit abzuschaltenden ersten Schaltelements visualisiert, wobei der Signalverlauf 25 das zeitliche Verhalten des bei der ersten Rückschaltung zu schließenden und damit zuzuschaltenden zweiten Schaltelements visualisiert, wobei der Signalverlauf 26 das zeitliche Verhalten des während der ersten Rückschaltung für die nachfolgende zweite Rückschaltung zum Öffnen und damit Abschalten vorzubereitenden dritten Schaltelements visualisiert, und wobei der Signalverlauf 27 das zeitliche Verhalten des während der Ausführung der ersten Rückschaltung für eine nachfolgende zweite Rückschaltung zum Schließen und damit Zuschalten vorzubereitenden vierten Schaltelements visualisiert. Der Signalverlauf 28 visualisiert das zeitliche Verhalten eines fünften Schaltelements, welches während der Ausführung der ersten Hochschaltung bzw. Rückschaltung und während der Ausführung der zweiten Hochschaltung bzw. Rückschaltung geschlossen gehalten wird.

Im Zeitpunkt A liegt eine Veränderung des Soll-Gangs (siehe Signalverlauf 19) und abgeleitet hiervon eine Veränderung des Ziel-Gangs (siehe Signal-verlauf 20) im Sinne einer gewünschten Mehrfachrückschaltung um zwei Gänge (x-2) vor, wobei dies die verschachtelte Ausführung bzw. Vorbereitung von aufeinanderfolgenden Rückschaltungen auslöst, nämlich derart, dass zum Zeitpunkt A einerseits das bei Ausführung der ersten Rückschaltung zu öffnende und damit abzuschaltende erste Schaltelement (siehe Signalverlauf 24) mit der Schaltphase beginnt, und dass andererseits das bei der Ausführung der ersten Rückschaltung zu schließende und damit zuzuschaltende zweite Schaltelement (siehe Signalverlauf 25) einer Schnellbefüllung unterzogen wird, wobei die Schnellbefüllung zwischen den Zeitpunkten A und B erfolgt.

Das während der Ausführung der ersten Rückschaltung, die eine Mehrfachschaltung ist, für die nachfolgende zweite Rückschaltung, die eine Einfachschaltung ist, vorzubereitende dritte Schaltelement (siehe Signalverlauf 26) sowie das vierte Schaltelement (siehe Signalverlauf 27) werden zum Zeitpunkt A auf einen definierten Zustand gesetzt. Das fünfte Schaltelement (siehe Signalverlauf 28) wird geschlossen gehalten,

Nach Ablauf der Schnellbefüllung des in der ersten Rückschaltung zu schließenden und damit zuzuschaltenden zweiten Schaltelements (siehe Signalverlauf 25) geht das zweite Schaltelement von der Schnellbefüllungsphase in eine Füllausgleichsphase über, wobei sich die Füllausgleichsphase zwischen den Zeitpunkten B und D erstreckt. Die Schnellbefüllungsphase zwischen den Zeitpunkten A und B und die Füllausgleichsphase zwischen den Zeitpunkten B und D definieren zusammen die Befüllungsphase des während der ersten Rückschaltung zu schließenden zweiten Schaltelements. Im Zeitpunkt D wird das während der ersten Rückschaltung zu schließende und damit zuzuschaltende zweite Schaltelement (siehe Signalverlauf 25) von der Befüllungsphase in die Schaltphase überführt.

Während der Ausführung der ersten Rückschaltung als Mehrfachschaltung, während der das erste Schaltelement gemäß dem Signalverlauf 24 geöffnet und damit abgeschaltet und das zweite Schaltelement gemäß dem Signal-verlauf 25 geschlossen und damit zugeschaltet wird, erfolgt eine Vorbereitung von zwei Schaltelementen für eine eventuell nachfolgend, im Beispiel als Einfachschaltung auszuführende zweite Rückschaltung.

So erfolgt zum Zeitpunkt C die Vorbereitung des in einer eventuell nachfolgenden zweiten Rückschaltung zu schließenden und damit zuzuschaltenden vierten Schaltelements (siehe Signalverlauf 27) mit einer Schnellbefüllung, die sich zwischen den Zeitpunkten C und E erstreckt. Mit Abschluss der Schnellbefüllung des vierten Schaltelements zum Zeitpunkt E wechselt dasselbe in eine Füllausgleichsphase, die gemäß Fig. 4 bis zum Zeitpunkt G andauert. Im Zeitpunkt G wechselt das zum Zuschalten vorbereitete vierte Schaltelement von der Befüllungsphase in die Schaltphase.

Ebenso wird während der Ausführung der ersten Rückschaltung für eine nachfolgende zweite Rückschaltung das dritte Schaltelement (siehe Signalverlauf 26) zum Öffnen bzw. Abschalten vorbereitet. Zum Zeitpunkt F wird eine Übergangsphase des für die nachfolgende zweite Rückschaltung vorbereiteten dritten und damit des vorbereiteten abschaltenden Schaltelements gestartet, wobei im Zeitpunkt S, der einem Synchronpunkt der ersten Rückschaltung entspricht, ein Wechsel von der ersten Rückschaltung auf die nachfolgende zweite Rückschaltung erfolgt.

Mit Erreichen des Zeitpunkts S sind die während der ersten Rückschaltung vorbereiteten Schaltelemente die aktiven Schaltelemente der nachfolgenden zweiten Rückschaltung. So wird zum Zeitpunkt G das während der ersten Rückschaltung zum Schließen und damit Zuschalten vorbereitete vierte Schaltelement zum schließenden Schaltelement der zweiten Rückschaltung.

Das in der ersten Rückschaltung abschaltende und damit öffnende erste Schaltelement wird weggeschaltet. Ab dem Zeitpunkt H erreicht das dritte Schaltelement das zum Öffnen bzw. Abschalten vorbereitet wurde, das Abschaltdruckniveau.

Das fünfte Schaltelement (siehe Signalverlauf 28) wird während der Ausführung der ersten Rückschaltung und während der Ausführung der zweiten Rückschaltung geschlossen bzw. annähernd geschlossen gehalten. Während der nachfolgenden zweiten Rückschaltung werden Schaltelemente für eine eventuell nachfolgende dritte Rückschaltung, die wiederum eine Einfachrückschaltung ist, vorbereitet (siehe Signalverläufe 29 und 30).

Nach einem zweiten Aspekt der hier vorliegenden Erfindung wird während der Ausführung der ersten Rückschaltung für die nachfolgende zweite Rückschaltung das während der zweiten Rückschaltung zu schließende vierte Schaltelement (siehe Signalverlauf 27) zu einem Zeitpunkt C durch Schnellbefüllung zum Schließen vorbereitet, der um eine zeitgesteuert oder ereignisgesteuert applizierbare erste Zeitspanne T₁ vor dem Erreichen des Synchronpunkts der laufenden ersten Rückschaltung im Zeitpunkt S liegt. Die zeitgesteuert oder ereignisgesteuert applizierbare erste Zeitspanne T₁ kann z. B. über einen Zeitvorbehalt oder eine Differenzdrehzahl relativ zum Synchronpunkt S der ersten Rückschaltung realisiert werden.

Dann, wenn der Zeitpunkt C, der sich aus dem Synchronpunkt S und der applizierbaren ersten Zeitspanne T1 ergibt. wie in Fig. 4 gezeigt, zeitlich nach dem Ende der Schnellbefüllungsphase des während der ersten Rückschaltung zu schließenden zweiten Schaltelements (siehe Signalverlauf 25), also zeitlich nach dem Zeitpunkt B, liegt, wird unmittelbar mit der Vorbereitung des während der zweiten Rückschaltung zu schließenden vierten Schaltelements (siehe Signalverlauf 27) unmittelbar begonnen.

Sollte hingegen der Zeitpunkt C, der sich aus dem Synchronpunkt S der laufenden ersten Rückschaltung und aus der applizierbaren ersten Zeitspanne T₁ ergibt, zeitlich vor dem Ende (Zeitpunkt B) der Schnellbefüllungsphase des während der ersten Rückschaltung zu schließenden zweiten Schaltelements liegen, so wird die Vorbereitung des vierten Schaltelements so lange verzögert, bis die Schnellbefüllungsphase des während der ersten Rückschaltung zu schließenden zweiten Schaltelements abgeschlossen ist,

Wie bereits erwähnt, wird das für die zweite Rückschaltung während der Ausführung der ersten Rückschaltung zum Schließen vorbereitete vierte Schaltelement (siehe Signalverlauf 27) zum Zeitpunkt G von der Vorbereitungsphase in die Schaltphase überführt.

Dieser Zeitpunkt G liegt um eine zeitgesteuert oder ereignisgesteuert applizierbare zweite Zeitspanne T₂vor dem Synchronpunkt S der ersten Rückschaltung. Dann, wenn wie Fig. 4 zeigt, dieser Zeitpunkt G, der sich aus dem Synchronpunkt S der ersten Rückschaltung und der applizierbaren zweiten Zeitspanne T₂ergibt, zeitlich nach dem Ende der Schnellbefüllungsphase (Zeitpunkt E) des während der zweiten Rückschaltung zu schließenden vierten Schaltelements liegt, wird das während der zweiten Rückschaltung zu schließende vierte Schaltelement unmittelbar von der Vorbereitungsphase in die Schaltphase überführt.

Sollte hingegen der Zeitpunkt G, der sich aus dem Synchronpunkt S der laufenden ersten Rückschaltung und der applizierbaren zweiten Zeitspanne T₂ ergibt, zeitlich vor dem Ende der Schnellbefüllungsphase (Zeitpunkt E) des während der zweiten Rückschaltung zu schließenden vierten Schaltelements liegen, so wird der Übergang des vierten Schaltelements von der Vorbereitungsphase in die Schaltphase so lange verzögert, bis die Schnellbefüllungsphase des vierten Schaltelements abgeschlossen ist.

Wie oben bereits ausgeführt, wird das während der Ausführung der ersten Rückschaltung für die nachfolgende zweite Rückschaltung zum Öffnen und damit Abschalten vorbereitete dritte Schaltelement zum Zeitpunkt F von der Vorbereitungsphase in die Schaltphase überführt, wobei dieser Zeitpunkt F um eine zeitgesteuert oder ereignisgesteuert applizierbare dritte Zeitspanne T₃ vor dem Erreichen des Synchronpunkts S der ersten Rückschaltung liegt, Zum Zeitpunkt F wird im gezeigten Ausführungsbeispiel entschieden, ob die während der ersten Rückschaltung vorbereitete zweite Rückschaltung tatsächlich ausgeführt wird. So wird eine vorbereitete Folgeschaltung nämlich nur dann ausgeführt, wenn dies einem Fahrerwunsch entspricht. So kann Fig. 4 entnommen werden, dass zum Zeitpunkt F gemäß dem den Fahrerwunsch repräsentierenden Signalverlauf 19 für den Soll-Gang eine weitere Rückschaltung (x-3) gewünscht ist, so dass die zweite Rückschaltung dann im Beispiel der Fig. 4 auch tatsächlich ausgeführt wird.

Wie bereits ausgeführt, werden auch während der zweiten Rückschaltung für eine dritte nachfolgende Rückschaltung gemäß den Signalverläufen 29 und 30 entsprechende Schaltelemente vorbereitet, wobei in Fig. 4 für die während der zweiten Rückschaltung vorzubereitende dritte Rückschaltung die korrespondierend applizierbare erste Zeitspanne T'₁, zweite Zeitspanne T'₂ und dritte Zeitspanne T'₃ auf einen Synchronpunkt S' der zweiten Rückschaltung bezogen sind. Die während der Ausführung der zweiten Rückschaltung vorbereitete dritte Rückschaltung ist eine Einfachrückschaltung.

Fig. 4 kann entnommen werden, dass zu einem durch den Synchronpunkt S' der zweiten Rückschaltung und die applizierbare dritte Zeitspanne T'₃ definierten Zeitpunkt auf Basis des den Fahrerwunsch repräsentierenden Signalverlaufs 19 für den Soll-Gang keine weitere Rückschaltung gewünscht ist, so dass die während der zweiten Rückschaltung vorbereitete dritte Rückschaltung nicht ausgeführt, sondern vielmehr abgebrochen wird.

Wie Fig. 4 entnommen werden kann, wird gemäß dem Signalverlauf 21 der Ist-Gang jeweils mit Erkennen der Synchronpunkte S bzw. S' einer ausgeführten Schaltung auf einen neuen Wert gesetzt, während der Ziel-Gang gemäß dem Signalverlauf 20 abhängig vom Soll-Gang gemäß dem Signalverlauf 19 auf den nächsten Gang wechselt oder unverändert bleibt.

Nach einem dritten Aspekt der hier vorliegenden Erfindung wird für das in Fig. 4 gezeigte Ausführungsbeispiel während der Ausführung der ersten Rückschaltung und während der Ausführung der zweiten Rückschaltung ein Drehmoment des Antriebsaggregats gegenüber einem von einem Fahrerwunsch abgeleiteten Drehmoment für das Antriebsaggregat erhöht und/oder verringert, um so die verschachtelte Ausführung der aufeinanderfolgenden Rückschaltungen zu unterstützen. So entspricht der in Fig. 4 in durchgezogener Linienführung dargestellte Signalverlauf 22 einem von einem Fahrerwunsch abgeleiteten Drehmoment für das Antriebsaggregat. Nach einer ersten in Fig. 4 strichpunktiert eingezeichneten Variante wird das Moment des Antriebsaggregats sowohl während der Ausführung der ersten Rückschaltung als auch während der Ausführung der zweiten Rückschaltung gegenüber dem vom Fahrerwunsch abgeleiteten Drehmoment für das Antriebsaggregat erhöht. Nach einer zweiten, in Fig. 4 gestrichelt eingezeichneten Variante wird hingegen das Drehmoment für das Antriebsaggregat zum Ende der zweiten Rückschaltung gegenüber dem vom Fahrerwunsch abgeleiteten Drehmoment für das Antriebsaggregat verringert. Auf beide Varianten wird nachfolgend im größeren Detail eingegangen.

Die in Fig. 4 strichpunktiert eingezeichnete Überhöhung des Drehmoments des Antriebsaggregats gegenüber dem von Fahrerwunsch abgeleiteten Drehmoment für das Antriebsaggregat erfolgt dann, wenn der Antriebsstrang entweder im Schubbetrieb oder im Teillastzugbetrieb betrieben wird.

Während jeder ausgeführten Rückschaltung wird im Schubbetrieb sowie Teillastzugbetrieb eine Drehmomenterhöhung des Antriebsaggregats gegenüber dem vom Fahrerwunsch abgeleiteten Drehmoment durchgeführt, wobei während jeder ausgeführten Rückschaltung überprüft wird, ob eine vorbereitete Folgerückschaltung dem Fahrerwunsch entspricht. Dies erfolgt zu einem Zeitpunkt, der einerseits vom Synchronpunkt S und andererseits von der applizierbaren dritten Zeitspanne T₃ abhängig ist, also im Ausführungsbeispiel der Fig. 4 zum Zeitpunkt F.

Dann, wenn zu diesem Zeitpunkt auf Basis des Fahrerwunsches eine Folgerückschaltung gewünscht ist, wird ein Übergang zwischen der Drehmomenterhöhung der ersten Rückschaltung und der Drehmomenterhöhung der zweiten Rückschaltung durchgeführt, wobei im gezeigten Ausführungsbeispiel die Drehmomenterhöhung der zweiten Rückschaltung größer ist als die Drehmomenterhöhung der ersten Rückschaltung. Im Unterschied hierzu ist es auch möglich, dass die Drehmomenterhöhung der zweiten Rückschaltung kleiner ist als die Drehmomenterhöhung der ersten Rückschaltung. Ebenso können beide Drehmomenterhöhungen gleich groß sein. Zwischen den beiden Drehmomenterhöhungen wird vorzugsweise ein rampenartiger Übergang durchgeführt.

Dann hingegen, wenn zum obigen Zeitpunkt, der durch den Synchronpunkt S und die applizierbare dritte Zeitspanne T₃ definiert ist, auf Basis des Fahrerwunschs eine Folgerückschaltung nicht gewünscht ist, wird die vorbereitete Folgeschaltung abgebrochen und zur Schaltungsbeendigung die Drehmomenterhöhung für das Antriebsaggregat beendet, Dies ist in Fig. 4 für die während der zweiten Rückschaltung vorbereitete dritte Rückschaltung dargestellt

Bei der Ausführung sowie Vorbereitung aufeinanderfolgender Rückschaltungen im Zugbetrieb des Antriebsstrangs wird während jeder ausgeführten Rückschaltung wiederum zu einem zeitgesteuert oder ereignisgesteuert applizierbaren Zeitpunkt, nämlich zu dem vom Synchronpunkt S und der applizierbaren dritten Zeitspanne T₃ abhängigen Zeitpunkt, überprüft, ob eine vorbereitete Folgeschaltung einem Fahrerwunsch entspricht, Ist dies, wie in Fig. 4 für die während der zweiten Rückschaltung vorbereitete dritte Rückschaltung gezeigt, nicht der Fall, so wird die vorbereitete Folgerückschaltung abgebrochen und zur Schaltungsbeendigung im Zugbetrieb die in Fig. 4 im Signalverlauf 22 gestrichelt dargestellte Drehmomentreduzierung für das Antriebsaggregat gegenüber dem vom Fahrerwunsch abgeleiteten Drehmoment durchgeführt.

Dann hingegen, wenn zu diesem Zeitpunkt eine Folgerückschaltung gewünscht ist, wie dies in Fig. 4 für die während der ersten Rückschaltung vorbereitete zweite Rückschaltung der Fall ist, wird die Momentenreduzierung des Antriebsaggregats nicht durchgeführt. Die Momentenreduzierung bei Rückschaltungen erfolgt demnach nur dann, wenn eine Schaltung zu beendigen ist, sich also keine Folgeschaltung anschließt. Weiterhin erfolgt die obige Momentenreduzierung lediglich im Zugbetrieb, und zwar sowohl unter Volllast als auch unter Teillast. Im Schubbetrieb hingegen erfolgt diese Momentenreduzierung bei Rückschaltungen nicht.

Im Ausführungsbeispiel der Fig. 4 sind zwei aufeinanderfolgende Rückschaltungen als verschachtelte Schaltungen durch Ansteuerung von fünf Schaltelementen ausführbar, wobei gemäß Fig. 4 zur Ausführung der ersten Rückschaltung als Mehrfachschaltung ein erstes Schaltelement (Signalverlauf 24) geöffnet und damit abgeschaltet und ein zweites Schaltelement (Signalverlauf 25) geschlossen und damit zugeschaltet wird. Während der Ausführung der ersten Rückschaltung wird für die nachfolgende zweite Rückschaltung das dritte Schaltelement (Signalverlauf 26) zum Öffnen und damit Abschalten vorbereitet und das vierte Schaltelement (Signalverlauf 27) zum Schließen und damit Zuschalten vorbereitet wird. Das fünfte Schaltelement (Signalverlauf 28) während der Ausführung der ersten Rückschaltung und während der Ausführung der zweiten Rückschaltung geschlossen bzw. annähernd geschlossen gehalten.

Die in Fig. 4 exemplarisch für verschachtelte Rückschaltungen gezeigte, erfindungsgemäße Vorgehensweise ist. analog auf verschachtelte Hochschaltungen übertragbar. Bei der Ausführung aufeinanderfolgender Hochschaltungen ergibt sich gegenüber der Ausführung aufeinanderfolgender Rückschaltungen gemäß Fig. 4 lediglich ein Unterschied hinsichtlich des dritten Aspekts der hier vorliegenden Erfindung, der die Erhöhung bzw. Verringerung des Drehmoments des Antriebsaggregats gegenüber einem von einem Fahrerwunsch abgeleiteten Drehmoment für das Antriebsaggregat betrifft.

So erfolgt bei aufeinanderfolgenden Hochschaltungen im Schubbetrieb des Antriebsstrangs für beide Hochschaltungen eine Drehmomenterhöhung, wohingegen im Zugbetrieb des in beiden Hochschaltungen eine Drehmomentreduzierung durchgeführt wird. Eine Drehmomentreduzierung zur Schaltungsbeendigung erfolgt bei aufeinanderfolgenden Hochschaltungen nicht.

### Bezugszeichen

- 1: Antriebsaggregat
- 2: Automatgetriebe
- 3: Rad
- 4: Pfeil
- 5: Pfeil
- 6: Getriebeschema
- 7: Getrieberadsatz
- 8: Getrieberadsatz
- 9: Getrieberadsatz
- 10: Getrieberadsatz
- 11: Getriebeeingang
- 12: Getriebeausgang
- 13: Schaltelement A
- 14: Schaltelement B
- 15: Schaltelement C
- 16: Schaltelement D
- 17: Schaltelement E
- 18: Schaltelementmatrix
- 19: Signalverlauf
- 20: Signalverlauf
- 21: Signalverlauf
- 22: Signalverlauf
- 23: Signalverlauf
- 24: Signalverlauf
- 25: Signalverlauf
- 26: Signalverlauf
- 27: Signalverlauf
- 28: Signalverlauf
- 29: Signalverlauf
- 30: Signalverlauf

## Patentansprüche

1. Verfahren zum Betreiben eines zumindest ein Automatgetriebe und ein Antriebsaggregat umfassenden Antriebsstrangs eines Kraftfahrzeugs, wobei aufeinanderfolgende Hochschaltungen bzw. aufeinanderfolgende Rückschaltungen derart verschachtelt ausführbar sind, dass bei einer ersten Hochschaltung bzw. Rückschaltung mindestens ein für eine nachfolgende zweite Hochschaltung bzw. Rückschaltung benötigtes Schaltelement während der laufenden ersten Hochschaltung bzw. Rückschaltung derart vorbereitet wird, dass bei Erreichen eines Synchronpunkts der laufenden ersten Hochschaltung bzw. Rückschaltung die sofortige Durchführung der nachfolgenden zweiten Hochschaltung bzw. Rückschaltung möglich ist, **dadurch gekennzeichnet, dass** bei einem Automatgetriebe mit genanfünf Schaltelementen, von welchen zur Moment- bzw. Kraftübertragung in einem Vorwärtsgang bzw. in einem Rückwärtsgang jeweils drei Schaltelemente geschlossen und zwei Schaltelemente geöffnet sind, zwei aufeinanderfolgende Hochschaltungen bzw. zwei aufeinanderfolgende Rückschaltungen durch Ansteuerung der fünf Schaltelemente derart ausführbar sind, dass:
a) eine erste Hochschaltung bzw. Rückschaltung als Mehrfachschaltung ausgeführt wird, wobei während der laufenden ersten Hochschaltung bzw. Rückschaltung als nachfolgende zweite Hochschaltung bzw. Rückschaltung eine Einfachschaltung oder eine Mehrfachschaltung vorbereitet wird;
b) bei der Ausführung der ersten Hochschaltung bzw. Rückschaltung als Mehrfachschaltung ein erstes Schaltelement des Automatgetriebes geöffnet und damit abgeschaltet sowie ein zweites Schaltelement des Automatgetriebes geschlossen und damit zugeschaltet wird;
c) während der Ausführung der ersten Hochschaltung bzw. Rückschaltung als Mehrfachschaltung für die nachfolgende zweite Hochschaltung bzw. Rückschaltung ein drittes Schaltelement des Automatgetriebes zum Öffnen und damit Abschalten sowie ein viertes Schaltelement des Automatgetriebes zum Schließen und damit Zuschalten vorbereitet wird;
d) während der Ausführung der ersten Hochschaltung bzw. Rückschaltung und während der Ausführung der zweiten Hochschaltung bzw. Rückschaltung ein fünftes Schaltelement geschlossen bzw. annähernd geschlossen gehalten wird.

2. Verfahren nach Anspruch 1, **dadurch gekennzeichnet, dass** während der Ausführung jeder Hochschaltung bzw. Rückschaltung für eine nachfolgende Hochschaltung bzw. Rückschaltung mindestens ein Schaltelement vorbereitet wird, wobei die nachfolgende Hochschaltung bzw. Rückschaltung jedoch nur dann ausgeführt wird, wenn zu einem zeitgesteuert oder ereignisgesteuert applizierbaren Zeitpunkt die vorbereitete Hochschaltung bzw. Rückschaltung einem Fahrerwunsch entspricht.

3. Verfahren nach Anspruch 1 oder 2, **dadurch gekennzeichnet, dass** bei einem Automatgetriebe mit fünf Schaltelementen, von welchen zur Moment- bzw. Kraftübertragung in einem Vorwärtsgang bzw. in einem Rückwärtsgang jeweils drei Schaltelemente geschlossen und zwei Schaltelemente geöffnet sind, während der Ausführung einer ersten Hochschaltung bzw. Rückschaltung für eine nachfolgende zweite Hochschaltung bzw. Rückschaltung ein während der zweiten Hochschaltung bzw. Rückschaltung schließendes Schaltelement zu einem Zeitpunkt zum Schließen vorbereitet wird, der um eine zeitgesteuert oder ereignisgesteuert applizierbare erste Zeitspanne vor dem Erreichen des Synchronpunkts der laufenden ersten Hochschaltung bzw. Rückschaltung liegt.

4. Verfahren nach Anspruch 3, **dadurch gekennzeichnet, dass** dann, wenn dieser Zeitpunkt, der sich aus dem Synchronpunkt der laufenden ersten Hochschaltung bzw. Rückschaltung und der applizierbaren ersten Zeitspanne ergibt, zeitlich vor einem Ende einer Schnellbefüllungsphase eines während der ersten Hochschaltung bzw. Rückschaltung schließenden Schaltelements liegt, die Vorbereitung des während der zweiten Hochschaltung bzw. Rückschaltung schließenden Schaltelements solange verzögert wird, bis die Schnellbefüllungsphase des während der ersten Hochschaltung bzw. Rückschaltung schließenden Schaltelements abgeschlossen ist, und dass anderenfalls vorzugsweise unmittelbar mit der Vorbereitung des während der zweiten Hochschaltung bzw. Rückschaltung schließendes Schaltelements begonnen wird.

5. Verfahren nach Anspruch 3 oder 4, **dadurch gekennzeichnet, dass** das für die zweite Hochschaltung bzw. Rückschaltung zum Schließen vorbereitete Schaltelement zu einem Zeitpunkt von einer Vorbereitungsphase in eine Schaltphase überführt wird, der um eine zeitgesteuert oder ereignisgesteuert applizierbare zweite Zeitspanne vor dem Erreichen des Synchronpunkts der laufenden ersten Hochschaltung bzw. Rückschaltung liegt.

6. Verfahren nach Anspruch 5, **dadurch gekennzeichnet, dass** dann, wenn dieser Zeitpunkt, der sich aus dem Synchronpunkt der laufenden ersten Hochschaltung bzw. Rückschaltung und der applizierbaren zweiten Zeitspanne ergibt, zeitlich vor einem Ende einer Schnellbefüllungsphase des während der zweiten Hochschaltung bzw. Rückschaltung schließenden Schaltelements liegt, der Übergang von der Vorbereitungsphase in die Schaltphase solange verzögert wird, bis die Schnellbefüllungsphase des während der zweiten Hochschaltung bzw. Rückschaltung schließenden Schaltelements abgeschlossen ist, und dass anderenfalls vorzugsweise unmittelbar das während der zweiten Hochschaltung bzw Rückschaltung schließende Schaltelement von der Vorbereitungsphase in die Schaltphase überführt wird.

7. Verfahren nach einem oder mehreren der Ansprüche 3 bis 6, **dadurch gekennzeichnet, dass** während der Ausführung der ersten Hochschaltung bzw. Rückschaltung für eine nachfolgende zweite Hochschaltung bzw. Rückschaltung ein während der zweiten Hochschaltung bzw. Rückschaltung öffnendes Schaltelement zu Beginn der ersten Hochschaltung bzw. Rückschaltung zum Öffnen vorbereitet wird, und dass das für die zweite Hochschaltung bzw. Rückschaltung zum Öffnen vorbereitete Schaltelement zu einem Zeitpunkt von einer Vorbereitungsphase in eine Schaltphase überführt wird, der um eine zeitgesteuert oder ereignisgesteuert applizierbare dritte Zeitspanne vor dem Erreichen des Synchronpunkts der laufenden ersten Hochschaltung bzw. Rückschaltung liegt.

8. Verfahren nach Anspruch 1 oder 2, **dadurch gekennzeichnet, dass** bei einem Automatgetriebe mit fünf Schaltelementen, von welchen zur Moment- bzw. Kraftübertragung in einem Vorwärtsgang bzw. in einem Rückwärtsgang jeweils drei Schaltelemente geschlossen und zwei Schaltelemente geöffnet sind, während der Ausführung einer ersten Hochschaltung bzw. Rückschaltung und/oder während der Ausführung einer zweiten, nachfolgenden Hochschaltung bzw. Rückschaltung ein Moment des Antriebsaggregats gegenüber einem von einem Fahrerwunsch abgeleiteten Moment für das Antriebsaggregat erhöht und/oder verringert wird, um die verschachtelte Ausführung aufeinanderfolgender Hochschaltungen bzw. Rückschaltungen zu unterstützen.

9. Verfahren nach Anspruch 8, **dadurch gekennzeichnet, dass** zur Ausführung aufeinanderfolgender Rückschaltungen im Zugbetrieb des Antriebsstrangs während jeder ausgeführten Rückschaltung zu einem zeitgesteuert oder ereignisgesteuert applizierbaren Zeitpunkt überprüft wird, ob eine vorbereitete Folgeschaltung einem Fahrerwunsch entspricht, wobei dann, wenn zu diesem Zeitpunkt auf Basis des Fahrwunschs eine Folgeschaltung nicht gewünscht ist, die vorbereitete Folgeschaltung abgebrochen und zur Schaltungsbeendigung eine Momentreduzierung des Antriebsaggregats gegenüber dem von dem Fahrerwunsch abgeleiteten Moment für das Antriebsaggregat durchgeführt wird, und wobei dann, wenn zu diesem Zeitpunkt auf Basis des Fahrwunschs eine Folgeschaltung gewünscht ist, die vorbereitete Folgeschaltung ausgeführt und die Momentreduzierung des Antriebsaggregats nicht durchgeführt wird.

10. Verfahren nach Anspruch 8 oder 9, **dadurch gekennzeichnet, dass** zur Ausführung aufeinanderfolgender Rückschaltungen im Schubbetrieb und Teillastzugbetrieb des Antriebsstrangs während jeder ausgeführten Rückschaltung eine Momenterhöhung des Antriebsaggregats gegenüber dem von dem Fahrerwunsch abgeleiteten Moment für das Antriebsaggregat durchgeführt wird, wobei während jeder ausgeführten Rückschaltung zu einem zeitgesteuert oder ereignisgesteuert applizierbaren Zeitpunkt überprüft wird, ob eine vorbereitete Folgeschaltung einem Fahrerwunsch entspricht, wobei dann, wenn zu diesem Zeitpunkt auf Basis des Fahrwunschs eine Folgeschaltung gewünscht ist, ein insbesondere rampenartiger Übergang zwischen den Momenterhöhungen der aufeinanderfolgenden Rückschaltungen durchgeführt wird, und wobei dann, wenn zu diesem Zeitpunkt auf Basis des Fahrwunschs eine Folgeschaltung nicht gewünscht ist, die vorbereitete Folgeschaltung abgebrochen und zur Schaltungsbeendigung die Momenterhöhung des Antriebsaggregats beendet wird.

11. Verfahren nach einem oder mehreren der Ansprüche 8 bis 10, **dadurch gekennzeichnet, dass** zur Ausführung aufeinanderfolgender Hochschaltungen im Zugbetrieb des Antriebsstrangs während jeder ausgeführten Hochschaltungen eine Momentreduzierung des Antriebsaggregats gegenüber dem von dem Fahrerwunsch abgeleiteten Moment durchgeführt wird, und dass zur Ausführung aufeinanderfolgender Hochschaltungen im Schubbetrieb des Antriebsstrangs während jeder ausgeführten Hochschaltungen eine Momenterhöhung des Antriebsaggregats gegenüber dem von dem Fahrerwunsch abgeleiteten Moment durchgeführt wird.

## Claims

1. Method for operating a drive train of a motor vehicle, which drive train comprises at least an automated gearbox and a power engine, it being possible for upshifts which follow one another or downshifts which follow one another to be performed in an interlaced manner in such a way that, in the case of a first upshift or downshift, at least one selector element which is required for a following second upshift or downshift is prepared during the current first upshift or downshift in such a way that, when a synchronous point of the current first upshift or downshift is reached, it is possible to immediately carry out the following second upshift or downshift, **characterized in that**, in the case of an automated gearbox with precisely five selector elements, of which, in order to transmit torque or force in a forward gear or in a reverse gear, in each case three selector elements are closed and two selector elements are open, two upshifts which follow one another or two downshifts which follow one another can be performed by actuation of the five selector elements in such a way that:
a) a first upshift or downshift is performed as a multiple shift, a single shift or a multiple shift being prepared as following second upshift or downshift while the first upshift or downshift is happening;
b) while the first upshift or downshift is being performed as a multiple shift, a first selector element of the automated gearbox is opened and therefore switched off and a second selector element of the automated gearbox is closed and therefore switched on;
c) while the first upshift or downshift is being performed as a multiple shift for the following second upshift or downshift, a third selector element of the automated gearbox is prepared for opening and therefore switching off and a fourth selector element of the automated gearbox is prepared for closing and therefore switching on;
d) while the first upshift or downshift is being performed and while the second upshift or downshift is being performed, a fifth selector element is kept closed or approximately closed.

2. Method according to Claim 1, **characterized in that**, while each upshift or downshift is being performed, at least one selector element is prepared for a following upshift or downshift, the following upshift or downshift being performed, however, only when the prepared upshift or downshift corresponds to a driver's request at an instant which can be applied in a time-controlled or process-controlled manner.

3. Method according to Claim 1 or 2, **characterized in that**, in the case of an automated gearbox with five selector elements, of which, in order to transmit torque or force in a forward gear or in a reverse gear, in each case three selector elements are closed and two selector elements are open, while a first upshift or downshift is being performed, a selector element which closes during a second upshift or downshift is prepared for the following second upshift or downshift at an instant for closing which lies before the synchronous point of the current first upshift or downshift is reached by a first time period which can be applied in a time-controlled or process-controlled manner.

4. Method according to Claim 3, **characterized in that**, when this instant which results from the synchronous point of the current first upshift or downshift and the first time period which can be applied lies temporally before an end of a rapid-filling phase of a selector element which closes during the first upshift or downshift, the preparation of the selector element which closes during the second upshift or downshift is delayed until the rapid-filling phase of the selector element which closes during the first upshift or downshift is concluded, and **in that** otherwise the preparation of the selector element which closes during the second upshift or downshift is preferably started immediately.

5. Method according to Claim 3 or 4, **characterized in that** the selector element which is prepared for closing for the second upshift or downshift is transferred from a preparation phase into a shifting phase at an instant which lies before the synchronous point of the current first upshift or downshift is reached by a second time period which can be applied in a time-controlled or process-controlled manner.

6. Method according to Claim 5, **characterized in that**, when this instant which results from the synchronous point of the current first upshift or downshift and the second time period which can be applied lies temporally before an end of a rapid-filling phase of the selector element which closes during the second upshift or downshift, the transition from the preparation phase into the shifting phase is delayed until the rapid-filling phase of the selector element which closes during the second upshift or downshift is concluded, and **in that** otherwise the selector element which closes during the second upshift or downshift is preferably transferred from the preparation phase into the shifting phase immediately.

7. Method according to one or more of Claims 3 to 6, **characterized in that**, while the first upshift or downshift is being performed, a selector element which opens during a following second upshift or downshift is prepared for opening for the second upshift or downshift at the beginning of the first upshift or downshift, and **in that** the selector element which is prepared for opening for the second upshift or downshift is transferred from a preparation phase into a shifting phase at an instant which lies before the synchronous point of the current first upshift or downshift is reached by a third time period which can be applied in a time-controlled or process-controlled manner.

8. Method according to Claim 1 or 2, **characterized in that**, in the case of an automated gearbox with five selector elements, of which, in order to transmit torque or force in a forward gear or in a reverse gear, in each case three selector elements are closed and two selector elements are open, while a first upshift or downshift is being performed and/or while a second, following upshift or downshift is being performed, a torque of the power engine is increased and/or reduced with respect to a torque for the power engine which is derived from a driver's request, in order to assist the interlaced performance of upshifts or downshifts which follow one another.

9. Method according to Claim 8, **characterized in that**, in order to perform downshifts which follow one another in the traction mode of the drive train, a check is made during each performed downshift at an instant which can be applied in a time-controlled or process-controlled manner as to whether a prepared subsequent shift operation corresponds to a driver's request, the prepared subsequent shift operation being interrupted and, in order to end the shift operation, a torque reduction of the power engine being carried out with respect to the torque for the power engine which is derived from the driver's request when a subsequent shift operation is not desired at this instant on the basis of the driving request, and the prepared subsequent shift operation being performed and the torque reduction of the power engine not being carried out when a subsequent shift operation is desired at this instant on the basis of the driving request.

10. Method according to Claim 8 or 9, **characterized in that**, in order to perform downshifts which follow one another in the overrun mode and part-load traction mode of the drive train, a torque increase of the power engine is carried out with respect to the torque for the power engine which is derived from the driver's request during each performed downshift, a check being made during each performed downshift at an instant which can be applied in a time-controlled or process-controlled manner as to whether a prepared subsequent shift operation corresponds to a driver's request, a transition which is, in particular, ramp-like being carried out between the torque increases of the downshifts which follow one another when a subsequent shift operation is desired at this instant on the basis of the driving request, and the prepared subsequent shift operation being interrupted and the torque increase of the power engine being ended in order to end the shift operation when a subsequent shift operation is not desired at this instant on the basis of the driving request.

11. Method according to one or more of Claims 8 to 10, **characterized in that**, in order to perform upshifts which follow one another in the traction mode of the drive train, a torque reduction of the power engine is carried out with respect to the torque which is derived from the driver's request during each performed upshift, and **in that**, in order to perform upshifts which follow one another in the overrun mode of the drive train, a torque increase of the power engine is carried out with respect to the torque which is derived from the driver's request during each performed upshift.

## Revendications

1. Procédé de fonctionnement d'une chaîne de propulsion d'un véhicule automobile comprenant au moins une boîte de vitesses automatique et un groupe propulseur, les passages aux rapports supérieurs successifs ou les passages aux rapports inférieurs successifs pouvant être réalisés de manière imbriquée de telle sorte que lors d'un premier passage à un rapport supérieur ou passage à un rapport inférieur, au moins un élément de changement de rapport nécessaire pour un deuxième passage à un rapport supérieur ou passage à un rapport inférieur suivant étant préparé pendant le premier passage à un rapport supérieur ou passage à un rapport inférieur en cours de telle sorte qu'en atteignant un point de synchronisation du premier passage à un rapport supérieur ou passage à un rapport inférieur en cours, il devient possible immédiatement d'exécuter le deuxième passage à un rapport supérieur ou passage à un rapport inférieur suivant, **caractérisé en ce que** dans le cas d'une boîte de vitesses automatique comprenant exactement cinq éléments de changement de rapport, parmi lesquels respectivement trois éléments de changement de rapport sont fermés et deux éléments de changement de rapport sont ouverts pour la transmission du couple ou de la force dans un rapport de marche avant ou dans un rapport de marche arrière, deux passages à un rapport supérieur successifs ou deux passages à un rapport inférieur successifs peuvent être réalisés par commande des cinq éléments de changement de rapport de telle sorte que :
a) un premier passage à un rapport supérieur ou passage à un rapport inférieur est réalisé en tant que passage multiple, dans lequel, pendant le premier passage à un rapport supérieur ou passage à un rapport inférieur en cours, un passage simple ou un passage multiple est préparé en tant que deuxième passage à un rapport supérieur ou passage à un rapport inférieur suivant;
b) lors de la réalisation du premier passage à un rapport supérieur ou passage à un rapport inférieur en tant que passage multiple, un premier élément de changement de rapport de la boîte de vitesses automatique est ouvert et donc débranché et un deuxième élément de changement de rapport de la boîte de vitesses automatique est fermé et donc connecté;
c) pendant la réalisation du premier passage à un rapport supérieur ou passage à un rapport inférieur en tant que passage multiple pour le deuxième passage à un rapport supérieur ou passage à un rapport inférieur suivant un troisième élément de changement de rapport de la boîte de vitesses automatique est préparé pour être ouvert et donc débranché et un quatrième élément de changement de rapport de la boîte de vitesses automatique est preparé pour être fermé et donc connecté ;
d) pendant la réalisation du premier passage à un rapport supérieur ou passage à un rapport inférieur et pendant la réalisation du deuxième passage à un rapport supérieur ou passage à un rapport inférieur, un cinquième élément de changement de rapport est maintenu fermé ou quasiment fermé.

2. Procédé selon la revendication 1, **caractérisé en ce que** pendant la réalisation de chaque passage à un rapport supérieur ou passage à un rapport inférieur, au moins un élément de changement de rapport est préparé pour un passage à un rapport supérieur ou passage à un rapport inférieur suivant, le passage à un rapport supérieur ou passage à un rapport inférieur suivant n'étant cependant réalisé que si le passage à un rapport supérieur ou passage à un rapport inférieur préparé correspond à un souhait du conducteur à un instant applicable par commande dans le temps ou par commande par événement.

3. Procédé selon la revendication 1 ou 2, **caractérisé en ce que** dans le cas d'une boîte de vitesses automatique comprenant cinq éléments de changement de rapport, parmi lesquels respectivement trois éléments de changement de rapport sont fermés et deux éléments de changement de rapport sont ouverts pour la transmission du couple ou de la force dans un rapport de marche avant ou dans un rapport de marche arrière, pendant la réalisation d'un premier passage à un rapport supérieur ou passage à un rapport inférieur un élément de changement de rapport qui se ferme pendant le deuxième passage à un rapport supérieur ou passage à un rapport inférieur est préparé pour un deuxième passage à un rapport supérieur ou passage à un rapport inférieur suivant en vue de sa fermeture à un instant qui se situe avant d'atteindre le point de synchronisation du premier passage à un rapport supérieur ou passage à un rapport inférieur en cours d'un premier intervalle de temps applicable par commande dans le temps ou par commande par événement.

4. Procédé selon la revendication 3, **caractérisé en ce que** lorsque cet instant qui résulte du point de synchronisation du premier passage à un rapport supérieur ou passage à un rapport inférieur en cours et du premier intervalle de temps applicable se trouve avant le moment d'une fin d'une phase de remplissage rapide d'un élément de changement de rapport qui se ferme pendant le premier passage à un rapport supérieur ou passage à un rapport inférieur, la préparation de l'élément de changement de rapport qui se ferme pendant le deuxième passage à un rapport supérieur ou passage à un rapport inférieur est retardée jusqu'à ce que la phase de remplissage rapide de l'élément de changement de rapport qui se ferme pendant le premier passage à un rapport supérieur ou passage à un rapport inférieur soit terminée, et que dans le cas contraire, la préparation de l'élément de changement de rapport qui se ferme pendant le deuxième passage à un rapport supérieur ou passage à un rapport inférieur commence de préférence immédiatement.

5. Procédé selon la revendication 3 ou 4, **caractérisé en ce que** l'élément de changement de rapport qui est préparé en vue d'être fermé pour le deuxième passage à un rapport supérieur ou passage à un rapport inférieur est amené d'une phase de préparation à une phase de changement de rapport à un instant qui se situe avant d'atteindre le point de synchronisation du premier passage à un rapport supérieur ou passage à un rapport inférieur en cours d'un deuxième intervalle de temps applicable par commande dans le temps ou par commande par événement.

6. Procédé selon la revendication 5, **caractérisé en ce que** lorsque cet instant qui résulte du point de synchronisation du premier passage à un rapport supérieur ou passage à un rapport inférieur en cours et du deuxième intervalle de temps applicable se trouve avant le moment d'une fin d'une phase de remplissage rapide de l'élément de changement de rapport qui se ferme pendant le deuxième passage à un rapport supérieur ou passage à un rapport inférieur, la transition de la phase de préparation à la phase de changement de rapport est retardée jusqu'à ce que la phase de remplissage rapide de l'élément de changement de rapport qui se ferme pendant le deuxième passage à un rapport supérieur ou passage à un rapport inférieur soit terminée, et que dans le cas contraire, la transition de la phase de préparation à la phase de changement de rapport de l'élément de changement de rapport qui se ferme pendant le deuxième passage à un rapport supérieur ou passage à un rapport inférieur est de préférence réalisée immédiatement.

7. Procédé selon une ou plusieurs des revendications 3 à 6, **caractérisé en ce que** pendant la réalisation du premier passage à un rapport supérieur ou passage à un rapport inférieur, un élément de changement de rapport qui s'ouvre pendant le deuxième passage à un rapport supérieur ou passage à un rapport inférieur est préparé au début du premier passage à un rapport supérieur ou passage à un rapport inférieur en vue d'être ouvert pour un deuxième passage à un rapport supérieur ou passage à un rapport inférieur suivant, et que l'élément de changement de rapport qui est préparé en vue d'être ouvert pour le deuxième passage à un rapport supérieur ou passage à un rapport inférieur est amené d'une phase de préparation à une phase de changement de rapport à un instant qui se situe avant d'atteindre le point de synchronisation du premier passage à un rapport supérieur ou passage à un rapport inférieur en cours d'un troisième intervalle de temps applicable par commande dans le temps ou par commande par événement.

8. Procédé selon la revendication 1 ou 2, **caractérisé en ce que** dans le cas d'une boîte de vitesses automatique comprenant cinq éléments de changement de rapport, parmi lesquels respectivement trois éléments de changement de rapport sont fermés et deux éléments de changement de rapport sont ouverts pour la transmission du couple ou de la force dans un rapport de marche avant ou dans un rapport de marche arrière, pendant la réalisation d'un premier passage à un rapport supérieur ou passage à un rapport inférieur et/ou pendant la réalisation d'un deuxième passage à un rapport supérieur ou passage à un rapport inférieur suivant, un couple du groupe propulseur est augmenté et/ou diminué par rapport à un couple du groupe propulseur dérivé d'un souhait du conducteur afin d'assister la réalisation imbriquée des passages à un rapport supérieur ou passages à un rapport inférieur successifs.

9. Procédé selon la revendication 8, **caractérisé en ce que** pour réaliser des passages à un rapport inférieur successifs en mode traction de la chaîne de propulsion, un contrôle à lieu pendant chaque passage à un rapport inférieur exécuté à un instant applicable par commande dans le temps ou par commande par événement pour vérifier si un changement de rapport suivant préparé correspond à un souhait du conducteur, dans quel cas, si un changement de rapport suivant n'est pas souhaité à ce moment en se basant sur le souhait du conducteur, le changement de rapport suivant préparé est interrompu et une réduction du couple du groupe propulseur par rapport au couple du groupe propulseur dérivé du souhait du conducteur est effectuée en vue de mettre fin au changement de rapport et, si un changement de rapport suivant est souhaité à ce moment en se basant sur le souhait du conducteur, le changement de rapport suivant préparé est réalisé et la réduction du couple du groupe propulseur n'a pas lieu.

10. Procédé selon la revendication 8 ou 9, **caractérisé en ce que** pour réaliser des passages à un rapport inférieur successifs en mode propulsion et en mode traction en charge partielle de la chaîne de propulsion, une augmentation du couple du groupe propulseur par rapport au couple du groupe propulseur dérivé du souhait du conducteur est effectuée pendant chaque passage à un rapport inférieur exécuté, un contrôle étant effectué pendant chaque passage à un rapport inférieur exécuté à un instant applicable par commande dans le temps ou par commande par événement pour vérifier si un changement de rapport suivant préparé correspond à un souhait du conducteur, dans quel cas, si un changement de rapport suivant est souhaité à ce moment en se basant sur le souhait du conducteur, une transition notamment de type rampe a lieu entre les augmentations du couple des passages au rapport inférieur successifs et, si un changement de rapport suivant n'est pas souhaité à ce moment en se basant sur le souhait du conducteur, le changement de rapport suivant préparé est interrompu et l'augmentation du couple du groupe propulseur est interrompue en vue de mettre fin au changement de rapport.

11. Procédé selon une ou plusieurs des revendications 8 à 10, **caractérisé en ce que** pour réaliser des passages à un rapport supérieur successifs en mode traction de la chaîne de propulsion, une réduction du couple du groupe propulseur par rapport au couple dérivé du souhait du conducteur est effectuée pendant chaque passage à un rapport supérieur exécuté et que pour réaliser des passages à un rapport supérieur successifs en mode propulsion de la chaîne de propulsion, une augmentation du couple du groupe propulseur par rapport au couple dérivé du souhait du conducteur est effectuée pendant chaque passage à un rapport supérieur exécuté.
